# EUROPEAN PATENT APPLICATION

(11) **EP 3 626 422 A1**
(43) Date of publication of application: **25.03.2020**
(21) Application number: 19198970.6
(22) Date of filing: 23.09.2019
(51) Int. Cl.: B29C 44/02, A43B 17/14, B29D 35/12, C08L 7/02, C08J 3/00

(54) **METHOD FOR MAKING A MATERIAL IN SHEETS OR ROLLS FOR MANUFACTURING MEDICAL DEVICES AND RESPECTIVE MATERIAL**

(30) Priority: 24.09.2018 IT 201800008852
(71) Applicant: LTA S.r.l., 50013 Campi Bisenzio Firenze (IT)
(72) Inventor: FORZIERI, Alessandro, 50013 Campi Bisenzio Firenze (IT)
(74) Representative: Paparo, Aldo

(57) **Abstract**

Described is a method for making a material in sheets or rolls for manufacturing sanitary devices, comprising the step of preparing a first natural rubber latex, preparing a second latex of the viscoelastic type, mixing the first and second latex to form a mix.

## Description

This invention relates to a method for making a material for manufacturing medical devices.

The invention also relates to a material for manufacturing medical devices. In particular, the invention relates to a foamy material for manufacturing medical devices.

The term "medical device" refers in particular to insoles for footwear and devices designed to protect other parts of the body.

In this description, but without limiting the scope of the invention, express reference will be made to insoles for footwear, thereby meaning, without distinction, removable insoles or fixed insoles, that is to say, already present in the item of footwear when purchased by the user.

Insoles are usually inserted inside footwear, especially sports or work footwear, which are able to improve the comfort of the footwear. Regardless of the aspects more specifically connected to the humidity due to the natural perspiration of the foot and, in terms of temperature, protection from the cold or effectiveness of the heat exchange, with regard to comfort it refers more specifically to aspects linked to the comfort of the footwear and the ability of the item of footwear to absorb the impacts generated during walking.

The insoles for footwear of known type, and in general the known medical devices designed to protect other parts of the body, such as, for example, knee or ankle supports, are not generally designed to simultaneously satisfy the requirements, on the one hand, of adequately protecting against impacts of the part of the body in question and, on the other hand, being able to adapt exactly to the specific shape of that part of the body. The aim of the invention is to provide a method for making a material in sheets or rolls for manufacturing sanitary devices which overcomes the drawbacks of the prior art devices.

A further aim of the invention is to provide a material for manufacturing sanitary devices which is at the same time functional in use and practical and effective to use.

Another aim of the invention is to provide an insole for footwear which at the same time allows an adaptation to the shape of the foot and an effective absorption of the impacts.

The technical features of the invention according to the above-mentioned aims may be easily inferred from the contents of the appended claims, especially claims 1 and 7, and, preferably, any of the claims that depend, either directly or indirectly, on these claims.

The advantages of the invention will become more apparent from the detailed description which follows.

The invention relates firstly to a method for making a material for manufacturing medical devices, that is to say, in particular, but without limiting the scope of the invention, for footwear insoles, that is to say, without distinction, removable insoles or fixed insoles for footwear and devices designed to protect other parts of the body.

In accordance with the method according to the invention a first natural rubber latex is selected from amongst those suitable for making GEL foam.

GEL foams are normally also used in the manufacturing of insoles for footwear since they have a good capacity to absorb and dissipate the impacts which are generated during walking.

Some examples of natural latex products suitable for making gel foams are the aqueous emulsions of India rubber extracted from Hevea Brasiliensis and then made available on the market in the Low Ammonia or Full Ammonia form, since they are suitable for undergoing a process of vulcanisation with sulphur-based mixtures.

Natural latex emulsions may also be considered useful for this purpose with a percentage of dry part of between 30% and 80% (% of India rubber present in the aqueous emulsion) stabilised with surface-active agents and normalised with various levels of ammonia.

The method according to the invention comprises the step of preparing a second synthetic latex of the viscoelastic type selected from among those suitable for making shape memory foams.

Shape memory foams are normally used also in the manufacturing of insoles for footwear since they have a good capacity for self-forming and adhering to the shape of the foot.

Examples of viscoelastic synthetic latex are the aqueous emulsions of molecules of synthetic rubber of the SBR type (Butadiene-Styrene Rubbers), where the percentages between Styrene and Butadiene can vary from 10/90 up to 90/10 and the concentration of rubber in emulsion can vary from 50% to 85%.

Further examples consist of synthetic latex mixes where, in addition to the synthetic rubber of the SBR type, aqueous emulsions of acrylic polymers or acrylic-styrene or polyurethanes are mixed.

There is a step of mixing the above-mentioned first and second latex to define a mix.

Chemical additives are added to the mix during this step which are suitably selected for reducing or in any case limiting the effects of the chemical/physical incompatibility which occur between natural rubber latexes and viscoelastic latex products.

Additives used to overcome the incompatibility between natural latex and synthetic latex are the surface-active agents derived from oleic acid, such as potassium oleate and/or sodium oleate.

For the same purpose, use is made of surface-active agents of the family of sodium sulfosuccinates.

Cationic surface-active agents may also be used deriving from quaternary ammonium salts, hydrocolloids such as hydroxymethylcellulose.

Moreover, in order to improve the compatibility between the above-mentioned natural and synthetic latexes it has been found opportune to correct the pH of the mix by suitably dosing strong bases such as, for example, ammonia or a solution of sodium hydroxide.

Advantageously, the mixing step is performed by keeping the mix at a temperature of between 10°C and 30°C.

There is therefore a maturing step, consisting in keeping the mix, for a predetermined time, under defined temperature conditions and at the same time actuating a slow and intermittent mixing of the mix. Experimental tests have shown that optimum results are obtained by mixing the mix for a period of between 8 and 24 hours at a temperature of between 10°C and 40°C.

It has also been found experimentally that it is preferable to perform a slow mixing of the mix, that is to say, using helical mixers, with a speed of rotation of between 10 rpm and 100 rpm.

Advantageously, the mixing is performed intermittently.

The method according to the invention comprises a foaming step during which a gelling agent is added to the mix.

Advantageously, compound gelling agents based on sodium fluorosilicate are used as gelling agents.

Alternatively, other salts of the fluorosilicate acid are used as gelling agents, such as, for example, potassium fluorosilicate.

The component is injected with a predetermined pressure and temperature, at a predetermined moment of the foaming step. Advantageously, the gelling agent is dosed in proportions variable from 0.05% to 5% by weight with respect to the mix.

The foaming step is performed by a device better known as a mechanical foaming machine which has a rotary head.

The device performs a two-phase mixing of the air with the mix previously matured during the maturing step.

The above-mentioned mixing is performed by injecting, under pressure, air into the mix and beating under pressure of the emulsion which is generated.

Advantageously, this operation occurs under controlled pressure and temperature conditions.

Optimum operating temperatures determined experimentally are between 10°C and 40°C. For this purpose, that is to say, maintaining the defined temperatures, thermally controlled foaming heads are used.

Moreover, the beating speed, determined by the speed of rotation of the above-mentioned rotary head of the mechanical foaming machine, is kept within a preferred range, approximately between 100 rpm and 400 rpm. Any colouring pigments which are designed to better chromatically characterise the final material are added to the mix during the foaming step.

During the foaming step described above, calibrating the dosing in proportion of air and mix of latexes determines the final density of the foamy material which will be obtained at the end of the process.

By using the method according to the invention it is possible to obtain a density of the finished product in the range of 150 g/l to 500 g/l.

The method comprises a step of spreading the foamed mix on a flat support to define a uniform layer of predetermined thickness. Advantageously, the calibration of the uniform layer during the spreading is obtained by means of a calibrating blade.

The flat support preferably consists of a conveyor belt or a continuous support, for example a textile sheet which slides under the calibrating blade and which may also constitute a component integrated in the end product made.

The spreading step consists in the physical distribution, on the above-mentioned flat support, of a calibrated layer of foamed mix.

The thickness of the above-mentioned uniform layer is such that the foamy material, which is the end product of this method, made in the form of sheets or rolls, has a thickness of between 1 and 10 mm.

Preferably, the spreading step described above occurs in continuous mode, that is to say, with the flat support which slides below the calibrating blade, continuously receiving the foamed mix.

The calibrated distance between the blade and the surface of the flat support which slides below determines the thickness of the foamy material which will be obtained at the end of the process.

A subsequent step is that of the gelling which is obtained by subjecting the layer of mix just spread on the conveyor belt to a sudden temperature increase.

This thermal increase is designed to activate the action of the above-mentioned gelling agent introduced during the previous foaming step.

In other words, the gelling agent is designed to trigger a reaction, called the gelling reaction, which is irreversible and chemically transforms the conditions of the mix, starting a process for aggregating the macromolecules of the mix of natural and viscoelastic latexes.

This is a critical process because it is very rapid.

In effect, the gelling occurs in an interval determined by the quantities of the components and by the temperature conditions which represent the main variable.

All the variables involved are adjusted and controlled so that the gelling process develops after the spreading step but before the further drying and vulcanisation step.

The above-mentioned fast temperature increase is obtained advantageously by exposure to an irradiation bench consisting of radiant panels located at the outfeed of the spreading blade and before a subsequent drying step.

The temperature of the radiant panels is advantageously maintained in the range of between 300°C and 400°C, and the distance of the mix layer from the radiant panels is between 20 cm and 60 cm.

Experimental tests have shown that the optimum exposure time of the mix layer to the irradiation by the radiant panels is between 10 seconds and 60 seconds.

The exact determination of these parameters is performed experimentally by checking that the uniform layer of mix has been gelled.

The method according to the invention comprises a further step of drying the uniform layer of mix to carry out the evaporation of the water contained therein and the vulcanisation of macromolecules previously aggregated. The drying step is advantageously performed inside an oven in which the evaporation of the aqueous phase is performed and the vulcanisation of the molecules of rubber previously aggregated by gelling.

The temperature inside the oven is advantageously between 120°C and 190°C, whilst the time the uniform layer of mix remains inside the oven is between 4 minutes and 15 minutes.

A ventilated type oven is advantageously used.

Preferably, continuous drying tunnel ovens are used.

The times and the temperatures are to be determined experimentally in relation to the vulcanisation at the outlet of the oven.

At the outfeed end of the oven, once the drying step has been completed, the uniform layer of mix, when cooled, defines a foamy material having particular characteristics.

The method and the material according to the invention achieve the preset aims and achieve significant advantages.

More specifically, with reference to its use by way of example for manufacturing insoles for footwear, the foamy material obtained with the method described above has, at the same time, a good capacity to absorb impacts, which is typical of gel materials and foams, and a good capacity to self-form and adhere to the shape of the foot which is typical of shape memory materials.

Moreover, by using the method according to the invention two materials are joined, the natural rubber latex and the viscoelastic latex, which have poor compatibility.

Thanks to the specific steps according to the method it has been possible to overcome, not without difficulty, the natural incompatibility of latexes which have extremely different characteristics and nature, in order to produce a material which offers excellent performance levels of a different type.

In other words, the foamy material according to the invention associates together characteristics which are currently present in separate materials, which can be individually acquired.

As mentioned, a typical use of the foamy material according to the invention is the footwear sector for making insoles or soles to be inserted in shoes.

In effect, the foamy material according to the invention has the capacity of self-forming and adhering to the shape of the part of the body with which it comes into contact (for example, the sole of the foot in the case of an insole) and at the same time being able to dissipate the energy of the impact typical of gel materials.

Further uses of the foamy material according to the invention, in the manufacture of sanitary devices, are those of making collars or protective inserts located in other zones of the human body, such as, for example, for protecting the malleolus.

## Claims

1. A method for making a material in sheets or rolls for manufacturing sanitary devices, comprising the following steps:
- preparing at least a first natural rubber latex selected from among those suitable for making GEL foams,
- preparing at least a second viscoelastic latex selected from among those suitable for making shape memory foams,
- mixing said first and second latex to define a mix,
- introducing a gelling agent in said mix,
- injecting pressurised air in said mix to favour the foaming of the mix,
- spreading said mix on a flat support to define a uniform layer of mix of predetermined thickness,
- subjecting said uniform layer of mix to a sudden increase in temperature to favour the gelling process,
- drying said uniform layer of mix for evaporation of the water contained therein and vulcanisation of macromolecules previously aggregated.

2. The method according to claim 1, **characterised in that** said mixing step is performed at a temperature of between 10°C and 30°C.

3. The method according to claim 1 or 2, **characterised in that** it comprises, after said mixing step, a step of slowly stirring and at intervals said mix, to favour the maintaining of the mixing of said first and second latex.

4. The method according to any one of the preceding claims, **characterised in that** said step of injecting pressurised air is actuated by a rotary foaming head, said head rotating at a speed of between 100 and 400 revolutions per minute.

5. The method according to any of the preceding claims, **characterised in that** said step of subjecting said uniform layer of mix to a sudden increase in temperature is actuated by exposing said uniform layer to thermal irradiation by means of infrared rays for a length of time of between 10 and 60 seconds.

6. The method according to any one of the preceding claims, **characterised in that** said step of drying said uniform layer of mix is actuated by means of an oven inside of which said uniform layer of mix is kept at a temperature of between 120°C and 190°C for a time of between 4 minutes and 15 minutes.

7. A foamy material for manufacturing sanitary devices, comprising a gelled mix comprising at least a first natural rubber latex and a second latex of the viscoelastic type.

8. The foamy material according to claim 7, **characterised in that** it has a density of between 100 and 500 g/litre.

9. The foamy material according to claim 7 or 8, **characterised in that** it is made in the form of sheets or rolls with a thickness of between 1 and 10 mm.

10. The foamy material according to any one of claims 7 to 9, **characterised in that** it is obtained with the method according to any of the claims 1 to 6.

11. Use of the foamy material according to any one of claims 7 to 10 for making sanitary devices.

12. A sanitary device made from foamy material according to any of claims 7 to 10.

13. The sanitary device according to claim 12, **characterised in that** it is an insole for footwear.
